# EUROPEAN PATENT APPLICATION

(11) **EP 2 508 114 A1**
(43) Date of publication of application: **10.10.2012**
(21) Application number: 12162799.6
(22) Date of filing: 02.04.2012
(51) Int. Cl.: A47L 15/42

(54) **A front adjustable carrier element**

(30) Priority: 05.04.2011 TR 201103297
(71) Applicant: Vestel Beyaz Esya Sanayi ve Ticaret A.S., 45030 Manisa (TR)
(72) Inventor: Orhan, Hakan, 35050 Izmir (TR); Osmanoglu, Erman, 45030 Manisa (TR)
(74) Representative: Cayli, Hülya

(57) **Abstract**

The carrier element (A) on which white goods can be placed comprises at least one wheel (1), at least one side edge (A1) to which this wheel (1) is engaged and at least one front edge (A2); at least one angular channel (8) to which at least one wheel shaft (5), connected to the wheel (1), is engaged, and which is located in the side edge (A1) and extends at a certain angle with vertical direction (Y); at least one connection element (2) which comprises at least one lift channel (8), to which said wheel shaft (5) is engaged and extends in vertical direction (Y), and is able to move along side edge (A1) by being located in this edge (A1); at least one movement shaft (3) which is connected to connection element (2) from one part and to front edge (A2) from other part, extends to connection element (2) from the front edge (A2) and moves the connection element (2) by rotational movement.

## Description

### Technical Field

Present invention relates to carrier elements on which white goods are placed.

### Prior Art

The carrier elements are used for removing or changing the height of white goods such as cooling devices, washing machine, dishwasher, etc. when necessary. Said carrier element preferably comprises wheels and therefore easy movement of the white goods on the base is ensured.

However in the carrier elements of the state of the art, said height adjustment is generally needed to be made when there are no goods thereon. In such a state, making any adjustment about the height of the carrier element becomes very hard and rough after the carrier element is started to be used (while white goods is thereon).

In the patent document no EP1895040A1, in which one of the embodiments to solve the mentioned problems is disclosed, a white goods with an adjustable foot is disclosed. In said embodiment, the height of the foot, which is engaged to a gear in the white goods, is changed via the rotation of the gear. In said embodiment, a helical gear, which is used in addition to said gear, ensures making said height adjustment via reaching the gear from the front side of the white goods. However, in the explained embodiment, a fixed structured foot is used and adjustment bars, special to the device, should be used.

The patent document no US7556227B2 discloses a system in which the height of a foot of white goods, engaged to a gear, is able to be changed by another gear which rotates this gear and by an adjustment bar engaged to this gear. However, owing to the gear structure, said system makes it harder to change the height of white goods and the gears are easily damaged.

### Brief Description of the Invention

The carrier element on which white goods can be placed comprises at least one wheel, at least one side edge to which this wheel is engaged and at least one front edge; at least one angular channel to which at least one wheel shaft, connected to the wheel, is engaged, and which is located on the side edge and extends at a certain angle with vertical direction ; at least one connection element which comprises at least one lift channel, to which said wheel shaft is engaged and extends in vertical direction, which is located on the side edge and is able to move along this edge ; at least one movement shaft which is connected to the connection element from one part and to the front edge from the other part, which extends to the connection element from the front edge and which moves the connection element along the side edge by rotational movement.

In the carrier element of the invention, the height of the carrier element can easily be adjusted by movement shafts which can easily be reached from the front part of the element. Moreover, in the adjustment made by the rotational movement of the movement shaft, the weight of the goods on the carrier element does not impede making adjustment.

### Objective of the Invention

The objective of the present invention is to develop a height adjustable carrier element on which white goods are placed.

Other aim of the present invention is to develop a carrier element the height of which can be adjusted by reaching the front edge of the element.

The other aim of the present invention is to develop a carrier element, the height of which is easily adjustable independent from the weight of white goods thereon.

Another aim of the present invention is to develop a cost effective carrier element which is easy to produce, use and assemble.

### Description of Drawings

Exemplary embodiments of a carrier element of the invention are shown in the annexed drawings wherein:
Figure 1 is a perspective view of a carrier element of the invention.
Figure 2 is a close perspective view of a semi-assembled state of the side edge of a carrier element of the invention.
Figure 3 is a perspective view of a side edge of a carrier element of the invention.

The parts in the figures are individually enumerated and the corresponding terms of reference numbers are as follows:

| | |
|---|---|
| Carrier element | (A) |
| Side edge | (A1) |
| Front edge | (A2) |
| Wheel | (1) |
| Connection element | (2) |
| Movement shaft | (3) |
| Shaft head | (4) |
| Wheel shaft | (5) |
| Lift channel | (6) |
| Side profile | (7) |
| Angular channel | (8) |

### Description of the Invention

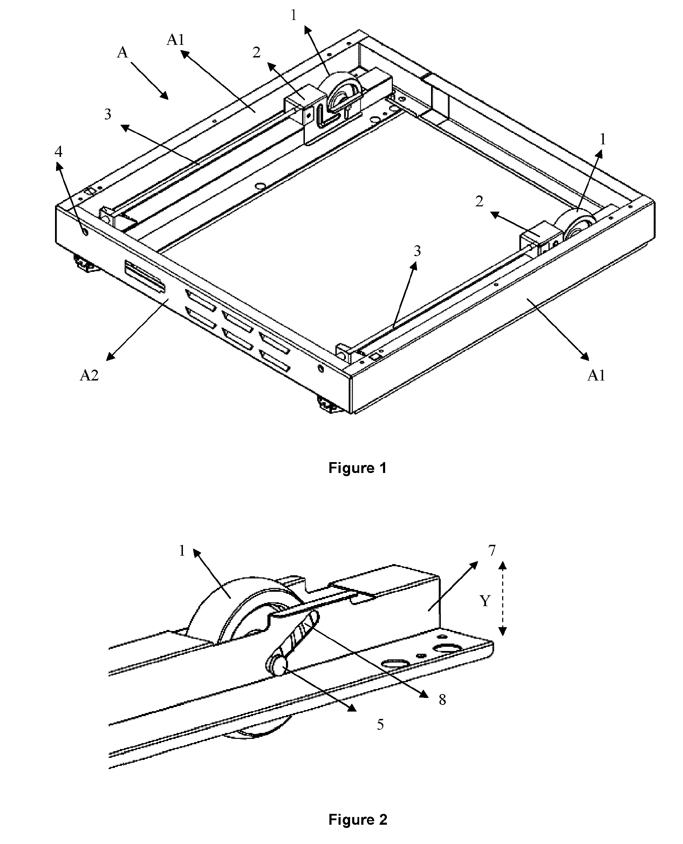

A view of an exemplary carrier element (A) of the present invention is shown in figure 1. The carrier element (A) of the invention comprises at least one wheel (1), at least one side edge (A1) to which the wheel (1) is connected and at least one front edge (A2). Said wheel (1) ensures movement of the carrier element (A) even if a home appliance (not shown) is thereon.

Figure 2 shows semi-assembled state of the side edge (A1) of an exemplary carrier element (A) of the invention. The wheel (1) is engaged to at least one angular channel (8) which is located in the side edge (A1) and extends at a certain angle with vertical direction (with Y direction) via at least one wheel shaft (5). The shaft (5) moves in this angular channel (8) while the wheel (1) is moved along the edge (A1). Therefore, the wheel (1) which moves along the edge (A1) is also moves in vertical direction and the change of the wheel (1) height in vertical direction (Y) according to the carrier element (A) is ensured.

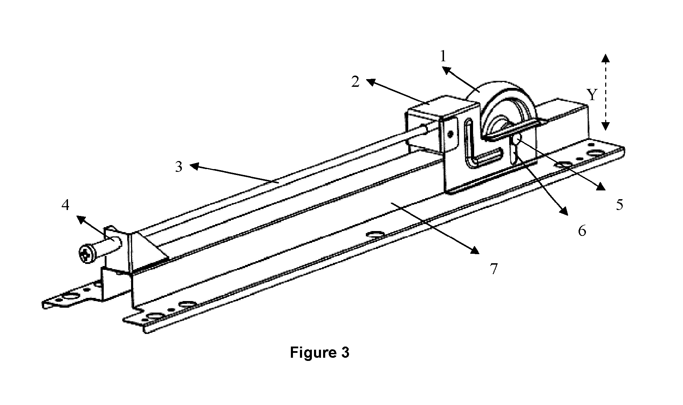

Figure 3 shows detail view of the side edge (A1) of an exemplary carrier element (A) of the invention. The carrier element (A) comprises at least one connection element (2) which is located at the side edge (A1) of the element (A) and can make linear movement by sliding along side edge (A1); and at least one movement shaft (3) which extends from front edge (A2) of the element (A) to the connection element (2), is connected to the connection element (2) and ensures the movement of the connection element (2). The wheel shaft (5) connected to the wheel (1) is simultaneously engaged to at least one lift channel (6) which is disposed on this connection element (2) and extends in vertical direction (in Y direction). Since the wheel shaft (5) is engaged to the connection element (2), while the connection element (2) is moved along the side edge (A1), the wheel (1) is also able to move along the side edge (A1).

The movement shaft (3), one part of which is connected to the connection element (2) and other part of which is connected to the front edge (A2), is able to make rotational movement. The rotational movement of the shaft (3) is converted to linear movement in the connection element (2) via at least one transmission element (e.g. a slot in which threads in spiral form on the movement shaft (3) is placed) and thus the movement of the connection element (2) along the side edge (A1) is ensured. The shaft (3), which is connected to the front edge (A2) of the carrier element (A), can easily be reached from the front edge (A2) and thus, ensures the height change of the carrier element (A) easily even if goods are thereon. By rotating the part of the shaft (3) connected to the front edge (A2), the connection element (2) moves on the side edge (A1). With this movement of the connection element (2), the wheel (1), which is engaged to the lift channel (6) via the wheel shaft (5), moves along the side edge (A1). Besides, since the shaft (5) is also engaged to the angular channel (8), the wheel (1) which moves along the side edge (A1) moves also in vertical direction (Y). With this movement, the movement of the wheel (1), which contacts with the base where the white goods is thereon, is ensured in vertical direction (Y) according to the carrier element (A), and therefore height change of the carrier element (A) according to said base is ensured.

Preferably, the wheel (1), the connection element (2), the movement shaft (3), the wheel shaft (5), the lift channel (6) and/or the angular channel (8) can be located on the side profile which is fixed to the internal part of the side edge (A1). Therefore, it is ensured that the external view of the carrier element (A) is not deteriorated.

In a preferred embodiment of the invention, the carrier element (A) comprises at least one electrical motor (not shown in figures) which is connected to the movement shaft (3) and rotates the movement shaft (3). When the electrical motor rotates the movement shaft (3), the connection element (2) and the wheel (1) move along the side edge (A1), and the position of the wheel (1) changes both along the side edge (A1) and in vertical direction (Y) and thus the height of the carrier element (A) is able to be changed also.

In another exemplary embodiment of the invention, the movement shaft (3) comprises a shaft head (4) which is at the part of the movement shaft (3) connected to the front edge (A2) of the carrier element (A) and extends to the outwards. This shaft head (4) is preferably in the shape of a screw head (i.e. star, hexagonal). Therefore, the height of the carrier element (A) can easily adjusted for example with the help of a screw driver.

## Claims

1. A carrier element (A), on which white goods can be placed, comprising at least one wheel (1), at least one side edge (A1) to which this wheel (1) is engaged and at least one front edge (A2) **characterized by** comprising;
- at least one angular channel (8) to which at least one wheel shaft (5), connected to the wheel (1), is engaged, and which is located in the side edge (A1) and extends at a certain angle with vertical direction (Y);
- at least one connection element (2) which comprises at least one lift channel (8), to which said wheel shaft (5) is engaged and extends in vertical direction (Y), and is able to move along the side edge (A1) by being located in this edge (A1);
- at least one movement shaft (3) which is connected to the connection element (2) from one part and to the front edge (A2) from other part, extends to the connection element (2) from the front edge (A2) and moves the connection element (2) along the side edge (A1) by rotational movement.

2. A carrier element (A) according to claim 1 **characterized by** comprising at least one side profile (7) which is fixed to the internal part of the side edge (A1).

3. A carrier element (A) according to claim 2 **characterized in that** the angular channel (6) is located on the side profile (7).

4. A carrier element (A) according to claim 2 **characterized in that** the connection element (2) is located on the side profile (7).

5. A carrier element (A) according to claim 2 **characterized in that** the movement shaft (3) is located on the side profile (7).

6. A carrier element (A) according to claim 1 **characterized by** comprising at least one electrical motor which is connected to the movement shaft (3) and rotates the movement shaft (3).

7. A carrier element (A) according to claim 1 **characterized in that** the movement shaft (3) comprises a shaft head (4) which is at the part of the movement shaft (3) connected to the front edge (A2) of the carrier element (A) and extends to the outwards.

8. A carrier element according to claim 7 **characterized in that** the shaft head (4) is in the shape of a screw head.
